# EUROPEAN PATENT SPECIFICATION

(11) **EP 3 842 126 B1**
(45) Date of publication and mention of the grant of the patent: **09.12.2026**
(21) Application number: 19870918.0
(22) Date of filing: 27.09.2019
(51) Int. Cl.: B01D 53/96, B01D 53/14, B01D 53/62, B01D 53/18, B01D 53/78, B01D 3/14

(54) **RECLAIMING DEVICE AND METHOD, AND CO2 RECOVERY DEVICE AND METHOD**
WIEDERVERWERTUNGSVORRICHTUNG UND -VERFAHREN UND VORRICHTUNG UND VERFAHREN ZUR CO2-RÜCKGEWINNUNG
DISPOSITIF ET PROCÉDÉ DE RÉCUPÉRATION, ET DISPOSITIF ET PROCÉDÉ RÉCUPÉRATION DE CO2

(30) Priority: 10.10.2018 US 201816156080
(43) Date of publication of application: 30.06.2021
(73) Proprietor: MITSUBISHI HEAVY INDUSTRIES, LTD., Tokyo, 100-8332 (JP)
(72) Inventor: MIYAMOTO, Osamu, Houston, Texas 77046 (US); KAMIJO, Takashi, Yokohama-shi, Kanagawa 220-8401 (JP); TSUJIUCHI, Tatsuya, Tokyo 108-8215 (JP)
(74) Representative: Studio Torta S.p.A.
(86) International application number: PCT/JP2019/038330
(87) International publication number: WO 2020/075544

(56) References cited:
- WO-A1-2014/098154
- WO-A1-2017/122443
- JP-A- 2011 104 580
- US-A- 5 993 608
- US-A- 5 993 608
- US-A1- 2013 315 809
- US-B2- 8 425 849

## Description

### TECHNICAL FIELD

The present disclosure relates to a reclaiming apparatus, a reclaiming method, a CO₂ recovery apparatus, and a CO₂ recovery method.

### BACKGROUND ART

As a method of recovering CO₂ contained in exhaust gas from a power generation facility or the like, a chemical absorption method is often used.

In a chemical absorption method, exhaust gas containing CO₂ and an absorption liquid containing an absorption agent make contact, and the absorption liquid absorbs CO₂ in the exhaust gas. Accordingly, CO₂ is removed from exhaust gas. The absorption liquid having absorbed CO₂ releases the absorbed CO₂ to be regenerated, by being heated by steam or the like, and is re-utilized as an absorption liquid. As the absorption liquid is re-utilized repeatedly, impurity substances from exhaust gas and depleted materials from the absorption liquid accumulate in the absorption liquid. Reclaiming is performed to remove such depleted materials or the like accumulating in the absorption liquid from the absorption liquid.

Reclaiming includes supplying a container with water and an absorption liquid which has released CO2, and heating the liquid (absorption liquid and water) inside the container, thereby recovering the evaporated absorption liquid and separating condensed depleted materials in the absorption liquid from the absorption liquid.

Further, in reclaiming, a kettle-type heat exchanger including a heat exchange device (heat-transfer tube or the like) inside a container (container called shell, for instance) may be used. In a case where reclaiming is performed by a heat exchanger, by flowing a heating fluid through a heat exchange device, a fluid inside a container is heated and boiled through heat exchange with a heating fluid at the heat exchange device. The container of the heat exchanger is greater than a heat exchange device (heat-transfer tube or the like), and inside the container, gas and liquid are separated in the upper space of the heat exchange device.

Herein, during execution of reclaiming, non-volatile materials such as depleted substances inside the container become condensed. Thus, during the process of condensation, the moisture concentration in the liquid becomes relatively low, and the viscosity of the fluid increases, which makes it difficult for natural convection to occur. When convection reduces, distribution of the concentration and the temperature in the liquid inside the container is more likely to become uneven, generating a high-temperature section and a non-volatile-material concentrated section partially in the liquid, which may cause bumping. Furthermore, in a case where the above described kettle-type heat exchanger is used, boiling occurs outside the heat exchange device (heat-transfer tube or the like), whereby the heat exchange device physically prevents convection, and thereby bumping is even more likely to occur.

Although not directly related to bumping prevention in reclaiming, as a measure to suppress foaming in reclaiming, US5993608 B discloses spraying a de-foaming agent toward the boundary between a gas-phase part of a gas-liquid separating device (reclaiming apparatus) and a liquid-phase part including an absorption liquid, from the gas-phase part.

Other known apparatuses in the art are shown in published documents US8425849 A, US5993608 A, WO2014098154 A1 or US2013315809 A1.

In particular, US8425849 A discloses a reclaiming apparatus and method for reducing absorbent loss in systems absorbing CO₂ or H2S from gases. The apparatus includes an absorbent reservoir and heater, distributing absorbent to contact steam counter-currently, volatilizing absorbent components and separating them from depleted materials.

### SUMMARY

### Technical Problem

However, US5993608B does not disclose any specific measure for suppressing bumping which may occur in reclaiming.

In view of the above, an object of at least one embodiment of the disclosure is to provide a reclaiming apparatus and a reclaiming method, and a CO2 recovery apparatus and a CO2 recovery method capable of suppressing bumping in reclaiming.

### Solution to Problem and Advantageous Effects

The aforementioned aims are solved by a reclaiming apparatus, a CO₂ recovery apparatus, a reclaiming method and a CO₂ recovery method as claimed in the appended set of claims.

Thanks to the claimed reclaiming apparatus, when the non-volatile material such as depleted materials condensate inside the container as reclaiming proceeds, bumping may occur in the container.

In this regard, the liquid inside the container is extracted via the circulation line, and the liquid is circulated to return to the container. Thus, it is possible to suppress bumping that may occur inside the container.

Moreover, the absorption liquid from the absorption liquid supply line is supplied to the container via the circulation line. Thus, in the circulation line, it is possible to introduce the absorption liquid into the container in a state where the liquid extracted from the container and the absorption liquid from the absorption liquid supply line are sufficiently mixed. Accordingly, it is possible to suppress uneven distribution of the concentration of the liquid inside the container, and suppress bumping inside the container effectively.

Furthermore, in a case where convection of the liquid reduces in the container, the temperature of the solvent is likely to decrease at the bottom part of the container, and the concentration of the non-volatile material is likely to increase.

In this regard, the liquid is extracted from the bottom part of the container where the temperature of the solvent is likely to decrease and the concentration of the non-volatile concentration is likely to increase, and the liquid is circulated through the circulation line. Thus, it is possible to reduce uneven distribution of the concentration and the temperature in the liquid inside the container, and suppress bumping inside the container effectively.

In detail, the liquid extracted from the container is returned to the position of the gas-phase part inside the container, and thus the liquid returned to the gas-phase part positioned above the liquid-phase part flows into the liquid-phase part from above. Thus, mixing of the liquid returned into the container from the circulation line and the liquid inside the container is promoted. Thus, uneven distribution of the temperature and the concentration in the liquid in the container is effectively reduced, and it is possible to suppress bumping inside the container effectively.

Further, the gas-phase part may be formed above the heat exchange device inside the container.

Moreover, the liquid extracted from the container is returned to the relatively-high position of the liquid-phase part that is above the lowest position of the heat exchange device, and thus mixing between the liquid returned to the liquid-phase part and the liquid inside the container is promoted. Thus, uneven distribution of the temperature and the concentration in the liquid in the container is effectively reduced, and it is possible to suppress bumping inside the container effectively.

Furthermore, the waste liquid pump for sending a waste liquid to the waste-liquid recovery tank is utilized as a circulation pump, and thus it is possible to suppress bumping in reclaiming while suppressing an increase in the installation cost.

In addition, a foaming suppressing agent is added to the absorption liquid supply line or the circulation line, and thus it is possible to mix a bumping suppressing agent in advance into the absorption liquid or the liquid before being supplied to the container, via the absorption liquid supply line or the circulation line. Thus, it is possible to suppress bumping inside the container effectively.

Moreover, when a rich liquid having a high concentration of absorption target material (e.g. CO₂) is supplied to the liquid inside the container, a gas being an absorption target material may be produced in the container. In this case, the gas forms bubble nuclei, which promotes smooth boiling of the solvent in the container.

Thusa rich liquid having a higher concentration of the absorption target material than the absorption liquid supplied to the container is supplied as a bumping suppressing agent. Thus, bubble nuclei of the absorption target material are formed in the liquid inside the container, which makes it possible to suppress bumping in reclaiming effectively.

Moreover, the bumping suppressing agent is added into the container from the bottom part of the container, and thus it is possible to suppress bumping inside the container effectively. For instance, by using a gas capable of forming bubble nuclei in the liquid inside the container, smooth boiling of the solvent is promoted inside the container, through formation of bubble nuclei in the liquid. Accordingly, it is possible to suppress bumping in reclaiming effectively.

Thanks to the claimed CO₂ recovery apparatus, in reclaiming of the absorption liquid from the absorption tower from the CO₂ recovery apparatus, the liquid inside the container is extracted via the circulation line, and the liquid is circulated to return to the container, or the bumping suppressing agent is added into the container from a bottom part of the container. Thus, it is possible to suppress bumping that may occur inside the container during reclaiming.

(In detail, in a CO₂ recovery apparatus in which at least a part of the CO₂ lean liquid stored in the regeneration tower is supplied to the absorption liquid supply line as the absorption liquid, at least a part of the CO₂ rich liquid stored in the absorption tower is used as a bumping suppressing agent, and thus it is possible to suppress bumping inside the container efficiently.

Thanks to the claimed reclaiming method, the liquid inside the container is extracted via the circulation line, and the liquid is circulated to return to the container. Thus, it is possible to suppress bumping that may occur inside the container during reclaiming.
Moreover the absorption liquid from the absorption liquid supply line is supplied to the container via the circulation line. Thus, in the circulation line, it is possible to introduce the absorption liquid into the container in a state where the liquid extracted from the container and the absorption liquid from the absorption liquid supply line are sufficiently mixed. Accordingly, it is possible to suppress uneven distribution of the concentration of the liquid inside the container, and suppress bumping inside the container effectively.

In detail, a bumping suppressing agent is added to the absorption liquid supply line or the circulation line, and thus it is possible to mix a bumping suppressing agent in advance into the absorption liquid and the liquid before being supplied to the container, via the absorption liquid supply line or the circulation line. Thus, it is possible to suppress bumping inside the container effectively.

Thanks to the claimed CO₂ recovery method, in reclaiming of the absorption liquid from the absorption tower, the liquid inside the container is extracted via the circulation line, and the liquid is circulated to return to the container. Thus, it is possible to suppress bumping that may occur inside the container during reclaiming.

### BRIEF DESCRIPTION OF DRAWINGS

FIG. 1 is a schematic diagram of a CO₂ recovery apparatus to which an example of a reclaiming apparatus is applied.
FIG. 2 is a schematic diagram of a reclaiming apparatus according to an embodiment of the invention.
FIG. 3 is a schematic diagram of a reclaiming apparatus according to an embodiment of the invention.
FIG. 4 is a schematic diagram of another example of a reclaiming apparatus.
FIG. 5 is a schematic diagram of another example of a reclaiming apparatus.
FIG. 6 is a schematic diagram of a reclaiming apparatus according to an embodiment of the invention.

### DETAILED DESCRIPTION

Embodiments will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention that is merely defined by the appended claims.

In the following description, a CO₂ absorption liquid containing a CO₂ absorption agent is reclaimed by a reclaiming apparatus.. For instance, the absorption agent may be a H₂S absorption agent that absorbs H₂S, and the absorption liquid may be a H₂S absorption liquid that contains a H₂S absorption agent. Further, in the following description, the CO₂ absorption agent and the CO₂ absorption liquid may be referred to as merely an absorption agent and an absorption liquid, respectively.

First, the overall configuration of a CO₂ recovery apparatus will be described, to which a reclaiming apparatus according to an embodiment is applied.

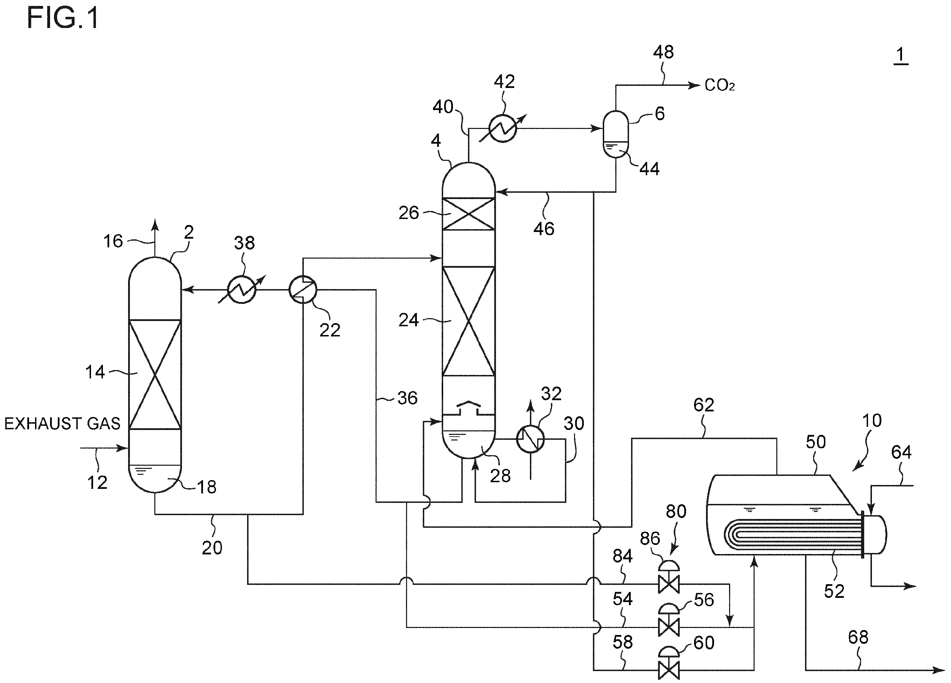

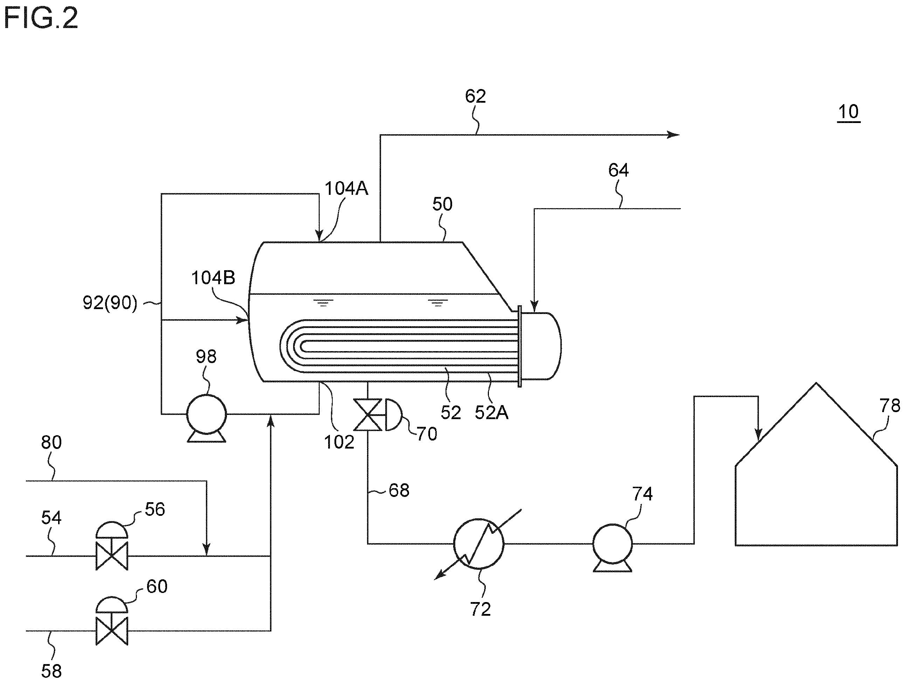

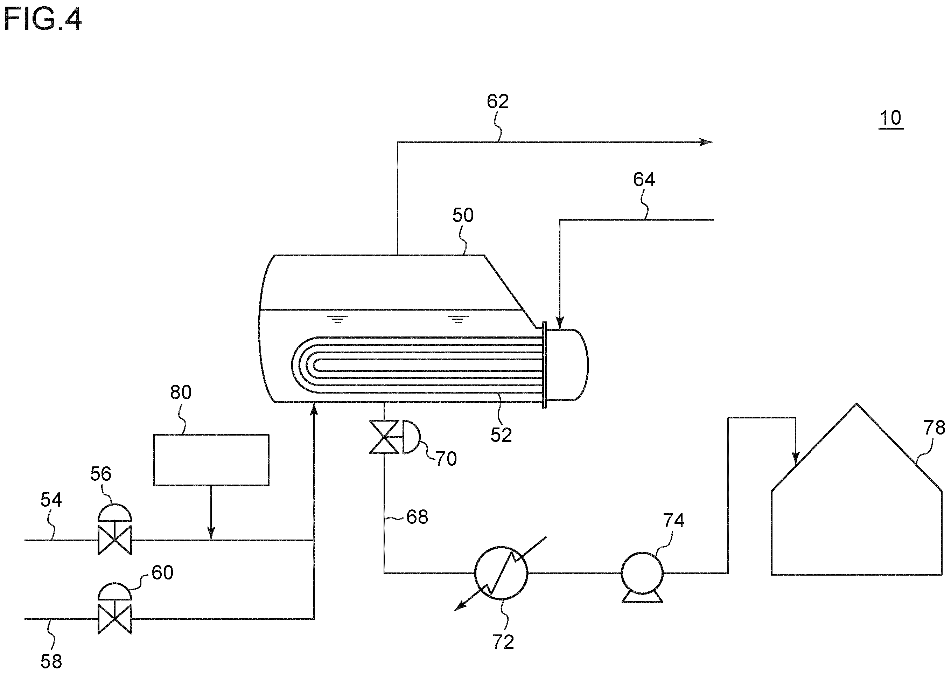

FIG. 1 is a schematic diagram of a CO₂ recovery apparatus to which a reclaiming apparatus according to an embodiment is applied. FIGs. 2 to 6 are each a schematic diagram of a reclaiming apparatus according to an embodiment.

The CO₂ recovery apparatus shown in FIG. 1 is an apparatus for recovering CO₂ from exhaust gas discharged from a power generation facility or a factory, for instance. As depicted in the drawings, the CO₂ recovery apparatus 1 includes an absorption tower 2 for causing an absorption liquid to absorb CO₂ in exhaust gas from a power generation facility or the like, a regeneration tower 4 for regenerating the absorption liquid having absorbed CO₂, a reflux water drum 6 configured to separate the released gas from the regeneration tower 4 into CO₂ gas and condensed water, and return the condensed water to the regeneration tower 4, and a reclaiming apparatus 10 for reclaiming the absorption liquid.

Exhaust gas containing CO₂ is supplied to the absorption tower 2 via an exhaust gas introduction line 12. Further, a pretreatment device for pre-processing exhaust gas (desulfurization, cooling, etc.) may be installed at the upstream of the absorption tower 2, and the absorption tower 2 may be supplied with exhaust gas after treated with such pretreatment.

The absorption tower 2 includes an absorption part 14 formed by a packed layer, for instance, and the absorption part 14 is supplied with a CO₂ absorption liquid containing a CO₂ absorption agent from above.

The exhaust gas having flown into the absorption tower 2 via the exhaust gas introduction line 12 flows upward through the absorption tower 2 from the side of the tower bottom part of the absorption tower 2, and flows into the absorption part 14. Further, in the absorption part 14, exhaust gas makes counter-current contact with the CO₂ absorption liquid supplied from the upper part of the absorption part 14, and thereby CO₂ in exhaust gas is absorbed by the CO₂ absorption liquid.

The CO₂ absorption liquid may be an aqueous solution of the CO₂ absorption agent.

The type of the CO₂ absorption agent is not particularly limited. For instance, alkanolamines such as monoethanolamine and diethanolamine, or a basic material other than amines such as sodium hydroxide, potassium hydroxide and calcium hydroxide can be used as the CO₂ absorption agent.

Exhaust gas deprived of CO₂ gas through contact with the CO₂ absorption liquid in the absorption part 14 is discharged outside from the tower top part 16 of the absorption tower 2.

On the other hand, the CO₂ absorption liquid having absorbed the CO₂ gas in the exhaust gas in the absorption part 14 falls onto the tower bottom part of the absorption tower, and is stored in the tower bottom part. The CO₂ absorption liquid stored in the tower bottom part of the absorption tower 2 is a rich absorption liquid 18 (CO₂ rich liquid) having a higher CO₂ concentration than the CO₂ absorption liquid described below stored in the tower bottom part of the regeneration tower 4. The rich absorption liquid 18 is supplied to the regeneration tower 4 from the absorption tower 2 via a rich liquid line 20 by a pump (not depicted) installed in the rich liquid line 20.

Further, as depicted in FIG. 1, a heat exchanger 22 for exchanging heat between the rich absorption liquid flowing through the rich liquid line 20 and the lean absorption liquid (CO₂ lean liquid) flowing through the lean liquid line 36 may be installed in the rich liquid line 20. By heating the rich absorption liquid through heat exchange with the lean absorption liquid having a relatively high temperature, it is possible to promote regeneration of the absorption liquid in the regeneration tower 4 described below.

The regeneration tower 4 includes a release part 24 that releases CO₂ gas from the rich absorption liquid and a first cleaning device 26 which cleans the CO₂ gas released at the release part 24 with reflux water.

The release part 24 includes a packing material, and is supplied with the rich absorption liquid from above through the rich liquid line 20. The rich absorption liquid is heated by the steam described below, in the release part 24, releases CO₂ gas, and becomes a lean absorption liquid which contains a relatively low rate of CO₂.

The lean absorption liquid having released CO₂ gas at the release part 24 descends from the regeneration tower 4, and is stored in the tower bottom part of the regeneration tower 4. The lean absorption liquid 28 is supplied, via a re-boiler line 30, to a regeneration heater (re-boiler) 32 installed in the re-boiler line 30. In the regeneration heater 32, the lean absorption liquid 28 exchanges heat with a heating medium (e.g. Water steam), whereby at least a part of the lean absorption liquid 28 changes in phase to saturated steam, and is supplied to the tower bottom part of the regeneration tower 4. The saturated steam produced by the regeneration heater 32 as described above flows upward through the regeneration tower 4 toward the release part 24, and is used as a heating source for heating the rich absorption liquid at the release part 24.

The lean absorption liquid (containing a lean absorption liquid that has not changed its phase in the regeneration heater 32) stored in the tower bottom part of the regeneration tower 4 is taken out from the tower bottom part of the regeneration tower 4, and is supplied to the absorption part 14 of the absorption tower 2 via the lean liquid line 36 by a feeding pump (not depicted) installed in the lean liquid line 36, thereby being re-utilized as the above described CO₂ absorption liquid. Further, a cooler 38 for cooling the lean absorption liquid may be installed in the lean liquid line 36.

The CO₂ gas released from the rich absorption liquid at the release part 24 flows upward toward the cleaning device 26 installed above the release part 24 in the regeneration tower 4. The cleaning device 26 removes the absorption agent remaining in the CO₂ gas as the CO₂ gas from the release part 24 makes gas-liquid contact with the cleaning liquid supplied from above the cleaning device 26.

The cleaning device 26 is not particularly limited as long as it is capable of promoting gas-liquid contact between CO₂ gas and the first cleaning liquid. For instance, the cleaning device 26 may include one or more stages of trays or a packed layer.

The CO₂ gas after passing through the cleaning device 26 is released from the tower top part of the regeneration tower 4, and is supplied to the CO₂ gas line 40. A condenser 42 is installed in the CO₂ gas line 40, and in the condenser 42, CO₂ gas is cooled and steam in the CO₂ gas is condensed. The CO₂ gas after passing through the condenser 42 is supplied to the reflux water drum 6 installed on the outlet side of the CO₂ gas line 40.

The reflux water drum 6 is configured to separate released gas from the regeneration tower 4 (CO₂-containing gas) into CO₂ gas and condensed water.

The condensed water 44 separated by the reflux water drum 6 is stored in the tower bottom part of the reflux water drum 6. The condensed water 44 is supplied to the cleaning device 26 of the regeneration tower 4 as a cleaning liquid, via the reflux water line 46. Further, the condensed water 44 is supplied to the reclaiming apparatus 10, via the water supply line 58.

On the other hand, CO₂ gas separated by the reflux water drum 6 is released from the reflux water drum 6 via a recovery line 48 connected to the tower top part of the reflux water drum 6, compressed by a compressor (not depicted) installed in the recovery line 48, and is taken out of the system as product CO₂, for instance.

The reclaiming apparatus 10 is configured to remove non-volatile components from a CO₂ absorption liquid, which includes non-volatile components such as impure substances from exhaust gas and depleted substances of the absorption liquid accumulating due to repetitive re-utilization of the absorption liquid in the CO₂ recovery apparatus 1, and recover the CO₂ absorption agent and return the CO₂ absorption agent to the CO₂ recovery apparatus 1.

As depicted in FIGs. 2 to 6, the reclaiming apparatus 10 includes a container 50 for storing an absorption liquid and water (container for reclaiming), an absorption liquid supply line 54 for supplying the container 50 with an absorption liquid, a water supply line 58 for supplying water to the container 50, a steam discharge line 62 for discharging steam from the container 50, and a heating device 52 (heat exchange device) for heating a liquid containing water and an absorption liquid.

Further, an absorption liquid valve 56 for adjusting the supply amount of absorption liquid to the container 50 is installed in the absorption liquid supply line 54, and a water valve 60 for adjusting the supply amount of water to the container 50 is installed in the water supply line 58.

In some embodiments, the heating device 52 may be configured to heat a liquid inside the container through heat exchange between the liquid inside the container and a heating medium.

For instance, as depicted in FIG. 1, the heating device 52 includes a U-shaped heat-transfer tube installed inside the container 50. The heating device 52 may be configured to heat the liquid inside the container through heat exchange with a heating medium. The heating medium supplied to the heating device 52 may be water vapor or oil, for instance.

Alternatively, in some embodiments, the heating device 52 may be configured to heat a liquid inside the container 50 by electricity.

In some embodiments, as depicted in FIG. 1, a lean absorption liquid (CO₂ lean liquid) from the lean liquid line 36 may be supplied to the absorption liquid supply line 54. In the embodiment depicted in FIG. 1, the lean absorption liquid is supplied to the absorption liquid supply line 54 from the lean liquid line 36 upstream of the heat exchanger 22. Nevertheless, in another embodiment, the lean absorption liquid may be supplied to the absorption liquid supply line 54 from the lean liquid line 36 downstream of the heat exchanger 22.

Further, in some embodiments, as depicted in FIG. 1, a part of the condensed water 44 stored in the reflux water drum 6 may be supplied to the water supply line 58. Further, water supplied to the container 50 is not limited to the condensed water from the reflux water drum 6. The container 50 may be supplied with water from another supply source, instead of, or in addition to, the condensed water from the reflux water drum 6.

Further, in some embodiments, as depicted in FIG. 1 for instance, the outlet of the steam discharge line 62 may be connected to the regeneration tower 4. That is, steam discharged from the container 50 may be supplied to the regeneration tower 4.

As depicted in FIGs. 2 to 6, the reclaiming apparatus 10 according to some embodiments includes the above described container 50, a waste-liquid recovery tank 78 for storing a waste liquid from the container 50, a waste liquid line 68 installed between the container 50 and the waste-liquid recovery tank 78, and a waste liquid cooler 72 installed in the waste liquid line 68.

A waste liquid pump 74 for pumping a waste liquid from the container 50 toward the waste-liquid recovery tank 78 is installed in the waste liquid line 68. A waste liquid valve 70 is installed in the waste liquid line 68.

The waste liquid cooler 72 is configured to cool the waste liquid from the container 50. The waste liquid cooler 72 may be configured to be supplied with a cooling medium, for instance, and cool the waste liquid through heat exchange with the cooling medium.

A procedure of reclaiming the absorption liquid by using the above described reclaiming apparatus 10 is as follows.

First, by opening the absorption liquid valve 56 and the water valve 60 to supply the container 50 with the absorption liquid and water, and heating the liquid inside the container with the heating device 52, the volatile components (water and absorption agent) in the liquid are evaporated, and the non-volatile components (depleted materials of the absorption liquid) are condensed in the liquid inside the container 50, and thereby the absorption agent in the container is separated from the non-volatile components (absorption liquid regeneration step).

Steam containing the absorption agent produced from heating is discharged from the container 50 via the steam discharge line 62, and returned to the regeneration tower 4 of the CO₂ recovery apparatus 1. The absorption agent returned to the regeneration tower 4 is used again as an absorption liquid that absorbs CO₂ in the CO₂ recovery apparatus 1.

Once the non-volatile components are sufficiently concentrated in the container 50 (i.e., the concentration of the non-volatile components in the liquid inside the container 50 increases sufficiently), the absorption liquid valve 56 is closed, and supply of the absorption liquid to the container 50 is stopped.

Next, by supplying the container 50 with water (condensed water from the reflux water drum 6, or the like) via the water supply line 58 and heating the liquid with the heating device 52 in a state where supply of the absorption liquid to the container 50 is shut off, the absorption agent remaining in the liquid is evaporated together with water. The steam containing the absorption agent produced in the container 50 from heating is discharged from the container 50 via the steam discharge line 62 (absorption liquid recovery step).

Once the concentration of the absorption agent in the liquid inside the container 50 decreases sufficiently, the water valve 60 is closed and supply of water to the container 50 is stopped, and heating of the liquid by the heating device 52 is stopped.

Further, sludge inside the container 50 is discharged as a waste liquid, to the outside of the container 50, via the waste liquid line 68 (discharge step). More specifically, the waste liquid valve 70 installed in the waste liquid line 68 is opened, and the waste liquid pump 74 is started. Accordingly, the waste liquid containing reclaiming sludge remaining in the container 50 after completion of the above described absorption liquid recovery step is discharged from the container 50, and is sent to the waste-liquid recovery tank 78 via the waste liquid line 68.

Further, the waste liquid discharged from the container 50 may be cooled by the waste liquid cooler 72 installed in the waste liquid line 68, and then sent to the waste-liquid recovery tank 78.

Hereinafter, a reclaiming apparatus 10 according to some embodiments will be described in more detail.

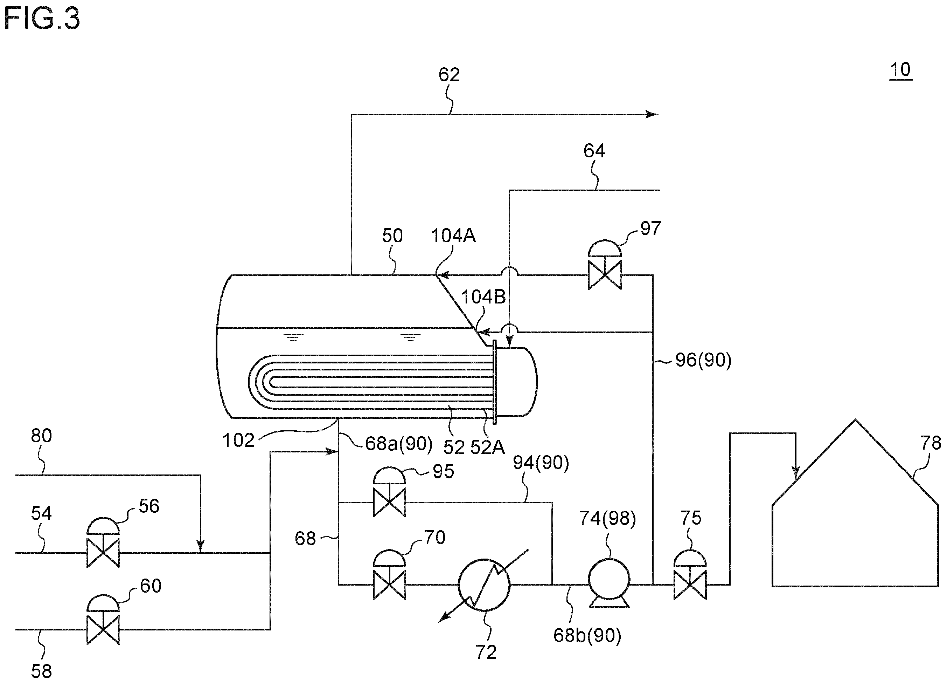

The reclaiming apparatus 10 depicted in FIGs. 2 and 3 includes a circulation line 90, and a circulation pump 98 installed in the circulation line 90. The circulation line 90 is configured to extract a liquid in the container 50 and circulate the liquid to the top portion of the container 50. Furthermore, the absorption liquid supply line 54 is connected to the circulation line 90, and is configured to supply the absorption liquid to the circulation line 90.

In an illustrative embodiment depicted in FIG. 2, the circulation line 90 includes a circulation passage 92 including a first end 102 and second ends 104A, 104B connected to the container 50.

In the embodiment depicted in FIG. 2, the circulation line 90 includes a first end 102 connected to the bottom part of the container 50, and is configured to extract the liquid from the container 50 via the first end 102. Further, the circulation line 90 includes second ends 104A, 104B connected to the container 50, and is configured to return the liquid from the container 50 via the second ends 104A, 104B. Herein, the second end 104A is connected to the container 50 at the top portion of the container 50, and the liquid from the circulation line 90 flows into the gas-phase part inside the container 50 via the second end 104A. Further, the second end 104B is connected to the container 50 at a position above the lowest position 52A of the heating device 52, and at this position, the liquid from the circulation line 90 flows into the liquid-phase part inside the container 50.

In the present embodiment, by operating the circulation pump 98 while the above described absorption liquid regeneration step or the absorption liquid recovery step is performed in the reclaiming apparatus 10, it is possible to extract the liquid inside the container 50 while supplying the circulation line 90 with the absorption liquid and circulate the liquid and return the liquid to the container 50.

In an illustrative embodiment depicted in FIG. 3, the circulation line 90 includes a bypass line 94 having two ends connected to the waste liquid line 68, a waste-liquid line upstream portion 68a being a portion upstream of the bypass line 94, of the waste liquid line 68, a waste-liquid line downstream portion 68b being a portion downstream of the bypass line 94, of the waste liquid line 68, and a return line 96.

In the embodiment depicted in FIG. 3, the waste-liquid line upstream portion 68a (the circulation line 90) includes a first end 102 connected to the bottom part of the container 50, and is configured to extract the liquid from the container 50 via the first end 102. Further, the return line 96 (the circulation line 90) includes second ends 104A, 104B connected to the container 50, and is configured to return the liquid from the container 50 via the second ends 104A, 104B. Herein, the second end 104A is connected to the container 50 at the top portion of the container 50, and the liquid from the circulation line 90 flows into the gas-phase part inside the container 50 via the second end 104A. Further, the second end 104B is connected to the container 50 at a position above the lowest position 52A of the heating device 52, and at this position, the liquid from the circulation line 90 flows into the liquid-phase part inside the container 50.

The bypass line 94 is installed to bypass the waste liquid valve 70 and the waste liquid cooler 72 installed in the waste liquid line 68. Further, a valve 95 is installed in the bypass line 94.

A waste liquid pump 74 is installed in the waste-liquid line downstream portion 68b. The waste liquid pump 74 functions as the above described circulation pump 98.

The return line 96 includes an end connected to the waste liquid line 68 at the downstream of the waste liquid pump 74, and other ends connected to the container 50 (the above described second ends 104A, 104B). A valve 97 is installed in the return line 96.

Further, in the waste liquid line 68, a valve 75 for switching the flow of the waste liquid to the waste-liquid recovery tank 78 is installed at the downstream of the connection point of the return line 96.

Further, in the embodiment depicted in FIG. 3, the absorption liquid supply line 54 is connected to the waste-liquid line upstream portion 68a.

In the embodiment depicted in FIG. 3, while the above described absorption liquid regeneration step or the absorption liquid recovery step is performed in the reclaiming apparatus 10, in a state where the waste liquid valve 70 and the valve 75 installed in the waste liquid line 68 are closed, the valve 95 and the valve 97 installed in the circulation line 90 are opened, and the waste liquid pump 74 (circulation pump 98) is operated. Accordingly, while supplying the absorption liquid to the waste-liquid line upstream portion 68a (circulation line 90), it is possible to extract the liquid inside the container 50, circulate the liquid and return the liquid to the container 50, via the circulation line 90 including the waste-liquid line upstream portion 68a, the bypass line 94, the waste-liquid line downstream portion 68b, and the return line 96.

Further, in the embodiment depicted in FIG. 3, in the discharge step after ending the absorption liquid recovery step, the waste liquid valve 70 and the valve 75 installed in the waste liquid line 68 are opened after closing the valve 95 and the valve 97 installed in the circulation line 90 are closed, and the waste liquid pump 74 (circulation pump 98) is operated. Accordingly, the waste liquid containing reclaiming sludge remaining in the container 50 after completion of the above described absorption liquid recovery step is discharged from the container 50, and is sent to the waste-liquid recovery tank 78 via the waste liquid line 68.

In some embodiments, the reclaiming apparatus 10 further includes a bumping suppressing agent supply part 80 for adding a bumping suppressing agent to the absorption liquid or the liquid inside the container 50.

In an illustrative embodiment depicted in FIGs. 2 to 5, the bumping suppressing agent supply part 80 is configured to add a bumping suppressing agent to the absorption liquid supply line 54. Further, in FIGs. 2 to 5, the bumping suppressing agent supply part 80 is configured to inject a bumping suppressing agent into the absorption liquid supply line 54 at the upstream of a merge point to the water supply line 58. In another embodiment, the bumping suppressing agent supply part 80 may be configured to inject a bumping suppressing agent into the absorption liquid supply line 54 at the downstream of the merge point to the water supply line 58.

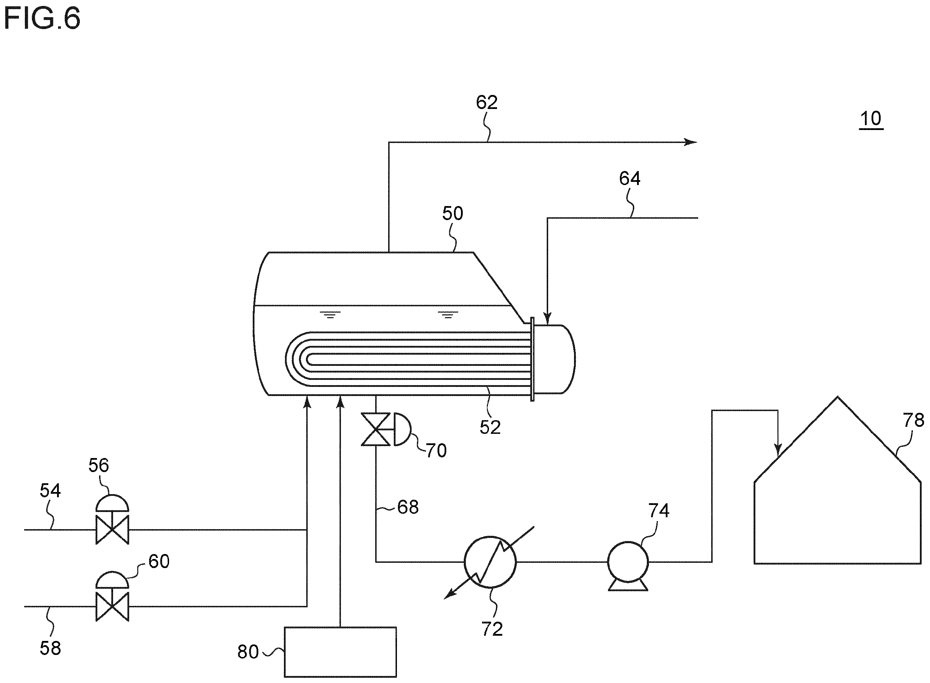

In some embodiments, the bumping suppressing agent supply part 80 may be configured to add a bumping suppressing agent to the circulation line 90, or, as depicted in FIG. 6, configured to add a bumping suppressing agent directly to the container 50. In FIG. 6, the bumping suppressing agent supply part 80 is configured to add a bumping suppressing agent into the container 50 from the bottom part of the container 50.

As the above described bumping suppressing agent, for instance, gas containing inert gas such as nitrogen (N₂) and carbon dioxide (CO₂) may be used(e.g. nitrogen, air, carbon dioxide). By mixing such gas into the liquid inside the container 50, the gas forms bubble nuclei in the liquid inside the container 50, which promotes smooth boiling of the liquid. Accordingly, bumping inside the container is suppressed effectively.

Further, as a bumping suppressing agent, a rich liquid may be used, which has a high concentration of absorption target material than that of an absorption liquid supplied to a container via the absorption liquid supply line 54.

When a rich liquid having a high concentration of absorption target material (e.g. CO₂) is supplied to the liquid inside the container 50, a gas being an absorption target material may be produced in the container 50. In this case, the gas forms bubble nuclei, which promotes smooth boiling of the solvent in the container.

Thus, by using the above described rich liquid as a bumping suppressing agent, bubble nuclei of an absorption target material are formed in the liquid inside the container 50, which makes it possible to suppress bumping in reclaiming effectively.

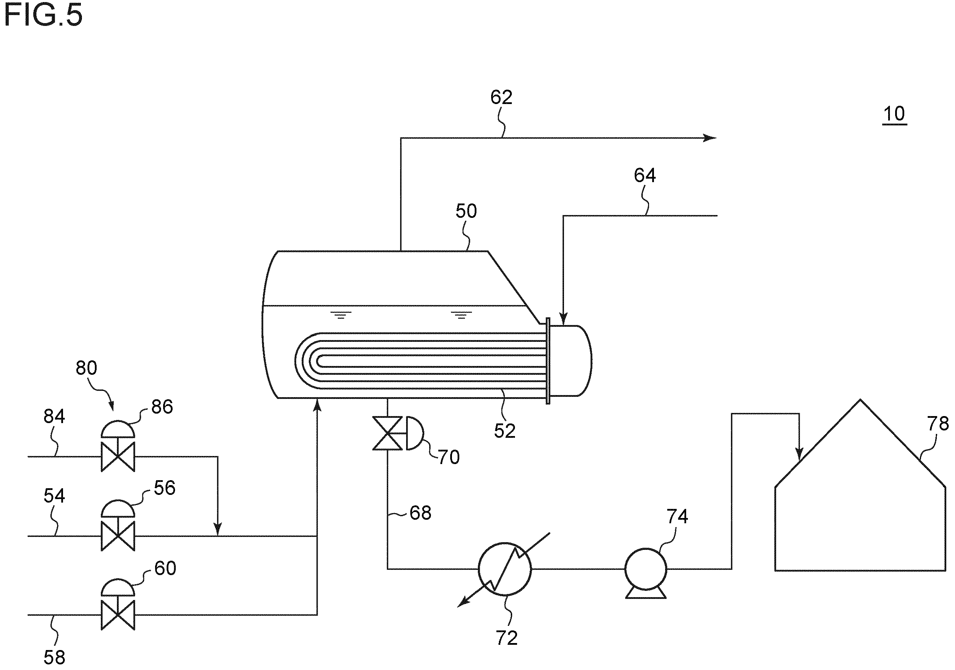

For instance, in the embodiment depicted in FIG. 5, the bumping suppressing agent supply part 80 includes a rich liquid supply line 84 for injecting a rich liquid (bumping suppressing agent) into the absorption liquid supply line 54, and a rich liquid valve 86 for adjusting the supply amount of the rich liquid to the absorption liquid supply line 54 via the rich liquid supply line 84. By adjusting the rich liquid valve 86, it is possible to supply the absorption liquid supply line 54 with a predetermined amount of rich liquid.

In the embodiment depicted in FIGs. 1 and 5, as described above, at least a part of the lean absorption liquid 28 (CO₂ lean liquid) stored in the regeneration tower 4 of the CO₂ recovery apparatus 1 is supplied to the absorption liquid supply line as an absorption liquid, and at least a part of the rich absorption liquid 18 (CO₂ rich liquid) stored in the absorption tower 2 is supplied to the rich liquid supply line 84 (bumping suppressing agent supply part 80) as a bumping suppressing agent.

In FIG. 1, the lean absorption liquid (CO₂ rich liquid) is supplied to the absorption liquid supply line 84 from the rich liquid line 20 upstream of the heat exchanger 22. Nevertheless, in another embodiment, the rich absorption liquid may be supplied to the rich liquid supply line 84 from the rich liquid line 20 downstream of the heat exchanger 22.

Further, the bumping suppressing agent supply part 80 in FIGs. 2 and 3 may be a bumping suppressing agent supply part 80 including the rich liquid supply line 84 and the rich liquid valve 86 similar to the embodiment depicted in FIG. 5, or a bumping suppressing agent supply part 80 of another embodiment.

With the reclaiming apparatus 10 according to some embodiments, the liquid inside the container is extracted via the circulation line, and the liquid is circulated to return to the container. Thus, it is possible to suppress bumping that may occur due to condensation or the like of the depleted materials in the container as the reclaiming proceeds.

### Description of Reference Numerals

- 2: Absorption tower
- 4: Regeneration tower
- 6: Reflux water drum
- 10: Reclaiming apparatus
- 12: Exhaust gas introduction line
- 14: Absorption part
- 16: Tower top part
- 18: Rich absorption liquid
- 20: Rich liquid line
- 22: Heat exchanger
- 24: Release part
- 26: Cleaning device
- 28: Lean absorption liquid
- 30: Re-boiler line
- 32: Regeneration heater
- 36: Lean liquid line
- 38: Cooler
- 40: CO₂ gas line
- 42: Condenser
- 44: Condensed water
- 46: Reflux water line
- 48: Recovery line
- 50: Container
- 50: Heating device
- 52A: Lowest position
- 54: Absorption liquid supply line
- 56: Absorption liquid valve
- 58: Water supply line
- 60: Water valve
- 62: Steam discharge line
- 68: Waste liquid line
- 68a: Waste-liquid line upstream portion
- 68b: Waste-liquid line downstream portion
- 70: Waste liquid valve
- 72: Waste liquid cooler
- 74: Waste liquid pump
- 75: Valve
- 78: Waste-liquid recovery tank
- 80: Bumping suppressing agent supply part
- 84: Rich liquid supply line
- 86: Rich liquid valve
- 90: Circulation line
- 92: Circulation passage
- 94: Bypass line
- 95: Valve
- 96: Return line
- 97: Valve
- 98: Circulation pump
- 102: First end
- 104A, 104B: Second end

## Claims

1. A reclaiming apparatus (10), comprising:
a container (50), which is configured such that in the container a reclaiming process of an absorption liquid having absorbed an absorption target material is performed;
an absorption liquid supply line (54) for supplying the container (50) with the absorption liquid;
a heat exchange device (52), installed inside the container (50), for heating a liquid inside the container (50);
a circulation line (90) for extracting the liquid inside the container (50), circulating the liquid and returning the liquid to the container (50); and
a circulation pump (98) installed in the circulation line (90),
**characterized in that** the absorption liquid supply line (54) is connected to the circulation line (90) and configured to supply the circulation line (90) with the absorption liquid.

2. The reclaiming apparatus (10) according to claim 1,
wherein the circulation line (90) includes a first end connected to a bottom part of the container (50), and is configured to extract the liquid from the container (50) via the first end.

3. The reclaiming apparatus (10) according to claim 1 or 2, wherein the circulation line (90) includes a second end connected to the container (50), and is configured to return the liquid to the container (50) via the second end, and wherein the second end is connected to a gas-phase part of the container (50).

4. The reclaiming apparatus (10) according to claim 1 or 2, wherein the circulation line (90) includes a second end connected to the container (50), and is configured to return the liquid to the container (50) via the second end,
wherein the second end is connected to a liquid-phase part inside the container (50) above the bottom of the heat exchange device.

5. The reclaiming apparatus (10) according to any one of claims 1 to 4, further comprising:
a waste-liquid recovery tank (78) for storing a waste liquid from the container (50);
a waste liquid line (68) installed between the container (50) and the waste-liquid recovery tank (78); and a waste liquid pump (74), installed in the waste liquid line (68), for sending the waste liquid from the container (50) to the waste-liquid recovery tank (78),
wherein the circulation line (90) is formed to pass through the waste liquid pump (74), and wherein the waste liquid pump (74) is configured to function as the circulation pump.

6. The reclaiming apparatus (10) according to any one of claims 1 to 5,
wherein the container (50) is configured such that in the container a reclaiming process of an absorption liquid having absorbed CO₂ or H₂S as the absorption target material is performed; wherein the reclaiming apparatus further comprises a bumping suppressing agent supply device (80) for adding a bumping suppressing agent to the absorption liquid supply line (54) or the circulation line (90); and
wherein the bumping suppressing agent contains a rich liquid having a higher concentration of the absorption target material than the absorption liquid.

7. The reclaiming apparatus (10) according to claim 6,
wherein the CO₂ absorption liquid is an aqueous solution of a CO₂ absorption agent; the CO₂ absorption agent being an alkanolamine, sodium hydroxide, potassium hydroxide or calcium hydroxide.

8. A reclaiming apparatus (10), comprising:
a container (50), which is configured such that in the container a reclaiming process of an absorption liquid having absorbed an absorption target material is performed; an absorption liquid supply line (54) for supplying the container (50) with the absorption liquid;
a water supply line for supplying the container with water;
a heat exchange device (52), installed inside the container (50), for heating a liquid inside the container (50) which contains the absorption liquid and the water; and
a bumping suppressing agent supply device (80) for adding a bumping suppressing agent into the container (50) from a bottom part of the container (50) via a bumping suppressing agent supply line connected to the bottom part, the bumping suppressing agent supply line being provided separately from the absorption liquid supply line and the water supply line, and
wherein the bumping suppressing agent contains an inert gas or a rich liquid having a higher concentration of the absorption target material than the absorption liquid.

9. A CO₂ recovery apparatus, comprising: an absorption tower configured to remove CO₂ in an exhaust gas by contacting with an absorption liquid containing an absorption agent;
a regeneration tower for regenerating the absorption liquid from the absorption tower; and the reclaiming apparatus (10) according to any one of claims 1 to 8,
wherein the CO₂ recovery apparatus is configured such that at least a part of the absorption liquid stored in the regeneration tower is supplied to the container (50) via the absorption liquid supply line (54).

10. A CO₂ recovery apparatus, comprising:
an absorption tower (2) configured to remove CO₂ in an exhaust gas by contacting with an absorption liquid containing an absorption agent;
a regeneration tower (4) for regenerating the absorption liquid from the absorption tower (2); and the reclaiming apparatus (10) according to claim 7,
wherein the CO₂ recovery apparatus is configured such that at least a part of a CO₂ lean liquid stored in the regeneration tower (4) is supplied to absorption liquid supply line (54) as the absorption liquid, and wherein the CO₂ recovery apparatus is configured such that at least a part of a CO₂ rich liquid stored in the absorption tower (2) is supplied to the bumping suppressing agent supply part (80) as the bumping suppressing agent.

11. A reclaiming method, comprising:
a step of supplying a container (50) including a heat exchange device (52) inside with an absorption liquid via an absorption liquid supply line (54), the absorption liquid having absorbed an absorption target material;
a step of performing a reclaiming process by heating a liquid inside the container (50) containing the absorption liquid with the heat exchange device;
a step of extracting the liquid inside the container (50) to a circulation line (90); and
a step of returning the liquid extracted to the circulation line (90) to the container (50), by circulating the liquid with a circulation pump installed in the circulation line,
**characterized in that** the absorption liquid supply line (54) is connected to the circulation line, and
wherein the step of supplying the absorption liquid includes supplying the container (50) with the absorption liquid via the circulation line.

12. The reclaiming method according to claim 11, further comprising a step of adding a bumping suppressing agent to the absorption agent supply line (54) or the circulation line (90).

13. The reclaiming method according to claim 12, comprising:
adding, as the bumping suppressing agent, a rich liquid having a higher concentration of the absorption target material than the absorption liquid to the absorption agent supply line (54) or the circulation line (90).

14. A CO₂ recovery method, comprising:
a step of causing an absorption liquid containing an absorption agent to absorb CO₂ in exhaust gas, in an absorption tower (2);
a step of supplying the absorption liquid from the absorption tower (2) to a regeneration tower (4), and regenerating the absorption liquid in the regeneration tower (4); and
a step of performing the reclaiming method according to any one of claims 11 to 13, wherein the step of supplying the container (50) with the absorption liquid includes supplying the container (50) with at least a part of the absorption liquid stored in the regeneration tower (4).

## Patentansprüche

1. Rückgewinnungsvorrichtung (10), umfassend:
ein Behälter (50), der derart konfiguriert ist, dass in diesem Behälter ein Rückgewinnungsprozess einer Absorptionsflüssigkeit durchgeführt wird, die ein zu absorbierendes Zielmaterial aufweist;
eine Absorptionsflüssigkeitszufuhrleitung (54) zum Befüllen des Behälters (50) mit der Absorptionsflüssigkeit;
eine Wärmeaustauschvorrichtung (52), die im Inneren des Behälters (50) angebracht ist und dazu dient, eine Flüssigkeit im Inneren des Behälters (50) zu erwärmen;
eine Zirkulationsleitung (90) zum Extrahieren der Flüssigkeit aus dem Behälter (50), zum Umwälzen der Flüssigkeit und zum Zurückführen der Flüssigkeit in den Behälter (50); und
eine in der Zirkulationsleitung (90) installierte Zirkulationspumpe (98),
**dadurch gekennzeichnet, dass** die Absorptionsflüssigkeitszufuhrleitung (54) mit der Zirkulationsleitung (90) verbunden und konfiguriert ist, um die Zirkulationsleitung (90) mit der Absorptionsflüssigkeit zu befüllen.

2. Rückgewinnungsvorrichtung (10) nach Anspruch 1,
wobei die Zirkulationsleitung (90) ein erstes Ende einschließt, das mit einem Bodenbereich des Behälters (50) verbunden ist, und so konfiguriert ist, dass sie die Flüssigkeit über das erste Ende aus dem Behälter (50) extrahiert.

3. Rückgewinnungsvorrichtung (10) nach Anspruch 1 oder 2, wobei die Zirkulationsleitung (90) ein zweites Ende einschließt, das mit dem Behälter (50) verbunden ist, und so konfiguriert ist, dass sie die Flüssigkeit über das zweite Ende in den Behälter (50) zurückführt, und wobei das zweite Ende mit einem Gasphasenbereich des Behälters (50) verbunden ist.

4. Rückgewinnungsvorrichtung (10) nach Anspruch 1 oder 2, wobei die Zirkulationsleitung (90) ein zweites Ende einschließt, das mit dem Behälter (50) verbunden ist, und so konfiguriert ist, dass sie die Flüssigkeit über das zweite Ende in den Behälter (50) zurückleitet,
wobei das zweite Ende mit einem Flüssigkeitsbereich im Inneren des Behälters (50) vorstehend zum Boden der Wärmeaustauschvorrichtung verbunden ist.

5. Rückgewinnungsvorrichtung (10) nach einem der Ansprüche 1 bis 4, ferner umfassend:
einen Abwasserauffangtank (78) zum Speichern von Abwasser aus dem Behälter (50);
eine zwischen dem Behälter (50) und dem Abwasserauffangtank (78) angeordnete Abwasserleitung (68); und eine in der Abwasserleitung (68) angeordnete Abwasserpumpe (74) zum Fördern des Abwassers aus dem Behälter (50) in den Abwasserauffangtank (78),
wobei die Zirkulationsleitung (90) gebildet wird, um durch die Abwasserpumpe (74) zu gehen, und wobei die Abwasserpumpe (74) konfiguriert ist, dass sie als Zirkulationspumpe fungiert.

6. Rückgewinnungsvorrichtung (10) nach einem der Ansprüche 1 bis 5,
wobei der Behälter (50) derart konfiguriert ist, dass in diesem Behälter ein Rückgewinnungsprozess einer Absorptionsflüssigkeit durchgeführt wird, die CO₂ oder H₂S als Absorptionszielstoff absorbiert hat; wobei die Rückgewinnungsrichtung weiter eine Stoßunterdrückungsmittelzufuhrvorrichtung (80) umfasst, um der Absorptionsflüssigkeitszufuhrleitung (54) oder der Zirkulationsleitung (90) ein Stoßunterdrückungsmittel zuzuführen; und
wobei das Stoßunterdrückungsmittel eine verdichtete Flüssigkeit enthält, die eine höhere Konzentration des Absorptionsmaterials aufweist als die Absorptionsflüssigkeit.

7. Rückgewinnungsvorrichtung (10) nach Anspruch 6,
wobei die CO₂-Absorptionsflüssigkeit eine wässrige Lösung eines CO₂-Absorptionsmittels ist; wobei das CO₂-Absorptionsmittel ein Alkanolamin, Natriumhydroxid, Kaliumhydroxid oder Calciumhydroxid ist.

8. Rückgewinnungsvorrichtung (10), umfassend:
ein Behälter (50), der derart konfiguriert ist, dass in diesem Behälter ein Rückgewinnungsprozess einer Absorptionsflüssigkeit durchgeführt wird, die ein zu absorbierendes Zielmaterial aufweist; eine Absorptionsflüssigkeitszufuhrleitung (54) zum Befüllen des Behälters (50) mit der Absorptionsflüssigkeit;
eine Wasserzufuhrleitung, um den Behälter mit Wasser zu füllen;
eine Wärmeaustauschvorrichtung (52), die im Inneren des Behälters (50) angebracht ist und dazu dient, eine Flüssigkeit im Inneren des Behälters (50), der die Absorptionsflüssigkeit und das Wasser enthält, zu erwärmen;
eine Stoßunterdrückungsmittelzufuhrvorrichtung (80) zum Befüllen des Behälters (50) mit einem Stoßunterdrückungsmittel vom Bodenbereich des Behälters (50) über eine mit diesem verbundene Zuführleitung für das Stoßunterdrückungsmittel, wobei die Zufuhrleitung für das Stoßdämpfungsmittel separat von der Zufuhrleitung für die Absorptionsflüssigkeit und der Wasserzufuhrleitung bereitgestellt wird und wobei das Stoßunterdrückungsmittel ein Inertgas oder eine reichhaltige Flüssigkeit enthält, die eine höhere Konzentration des zu absorbierenden Zielmaterials aufweist als die Absorptionsflüssigkeit.

9. CO₂-Rückgewinnungsvorrichtung, umfassend: einen Absorptionsturm, der so konfiguriert ist, dass er CO₂ aus einem Abgas durch Kontakt mit einer ein Absorptionsmittel enthaltenden Absorptionsflüssigkeit entfernt;
einen Regenerationsturm zur Regeneration der Absorptionsflüssigkeit aus dem Absorptionsturm; und die Rückgewinnungsvorrichtung (10) nach einem der Ansprüche 1 bis 8,
wobei die CO₂-Rückgewinnungsvorrichtung so konfiguriert ist, dass zumindest ein Teil der im Regenerationsturm gespeicherten Absorptionsflüssigkeit über die Absorptionsflüssigkeitszufuhrleitung (54) dem Behälter (50) zugeführt wird.

10. CO₂-Rückgewinnungsvorrichtung, umfassend:
einen Absorptionsturm (2), der konfiguriert ist, CO₂ aus einem Abgas durch Inkontaktbringen mit einer Absorptionsflüssigkeit, die ein Absorptionsmittel enthält, zu entfernen;
einen Regenerationsturm (4) zum Regenerieren der Absorptionsflüssigkeit aus dem Absorptionsturm (2); und die Rückgewinnungsvorrichtung (10) nach Anspruch 7,
wobei die CO₂-Rückgewinnungsvorrichtung derart konfiguriert ist, dass mindestens ein Teil einer im Regenerationsturm (4) gespeicherten CO₂-armen Flüssigkeit der Absorptionsflüssigkeitszufuhrleitung (54) als Absorptionsflüssigkeit zugeführt wird, und wobei die CO₂-Rückgewinnungsvorrichtung derart konfiguriert ist, dass mindestens ein Teil einer im Absorptionsturm (2) gespeicherten CO₂-reichen Flüssigkeit als Stoßunterdrückungsmittel dem Stoßunterdrückungsmittelzufuhrteil (80) zugeführt wird.

11. Rückgewinnungsverfahren, umfassend:
einen Schritt, bei dem ein Behälter (50), der im Inneren eine Wärmeaustauschvorrichtung (52) einschließt, über eine Absorptionsflüssigkeitszufuhrleitung (54) mit einer Absorptionsflüssigkeit befüllt wird, wobei die Absorptionsflüssigkeit ein Material aufweist, das absorbiert wurde;
einen Schritt zum Durchführen eines Rückgewinnungsprozesses durch Erhitzen einer Flüssigkeit im Inneren des Behälters (50), die die Absorptionsflüssigkeit enthält, mit der Wärmetauschvorrichtung;
einen Schritt zum Abziehen der Flüssigkeit im Inneren des Behälters (50) in eine Zirkulationsleitung (90); und
einen Schritt zum Zurückführen der in die Zirkulationsleitung (90) abgeleiteten Flüssigkeit in den Behälter (50) durch Zirkulieren der Flüssigkeit mit einer in der Zirkulationsleitung installierten Zirkulationspumpe,
**dadurch gekennzeichnet, dass** die Absorptionsflüssigkeitszufuhrleitung (54) mit der Zirkulationsleitung verbunden ist, und wobei der Schritt des Füllens der Absorptionsflüssigkeit das Zuführen der Absorptionsflüssigkeit in den Behälter (50) über die Zirkulationsleitung einschließt.

12. Rückgewinnungsverfahren nach Anspruch 11, ferner umfassend einen Schritt, bei dem ein Stoßunterdrückungsmittel in die Absorptionsmittelzufuhrleitung (54) oder die Zirkulationsleitung (90) eingebracht wird.

13. Rückgewinnungsverfahren nach Anspruch 12, umfassend:
Hinzufügen eines reichhaltigen Flüssigkeitsgemisches, das eine höhere Konzentration des Absorptionsmaterials aufweist als die Absorptionsflüssigkeit, als Stoßunterdrückungsmittel in die Absorptionsmittelzufuhrleitung (54) oder die Zirkulationsleitung (90).

14. CO₂-Rückgewinnungsverfahren, umfassend:
einen Schritt, bei dem eine ein Absorptionsmittel enthaltende Absorptionsflüssigkeit dazu gebracht wird, CO₂ im Abgas in einem Absorptionsturm (2) zu absorbieren;
einen Schritt, bei dem die Absorptionsflüssigkeit aus dem Absorptionsturm (2) einem Regenerationsturm (4) zugeführt und die Absorptionsflüssigkeit im Regenerationsturm (4) regeneriert wird; und
einen Schritt zum Durchführen des Rückgewinnungsverfahrens nach einem der Ansprüche 11 bis 13, wobei der Schritt des Zuführens der Absorptionsflüssigkeit in den Behälter (50) das Zuführen zumindest eines Teils der im Regenerationsturm (4) gespeicherten Absorptionsflüssigkeit in den Behälter (50) umfasst.

## Revendications

1. Appareil de récupération (10), comprenant :
un récipient (50), qui est configuré de telle sorte qu'un processus de récupération d'un liquide d'absorption ayant absorbé une matière cible d'absorption soit effectué dans le récipient ;
une conduite d'alimentation en liquide d'absorption (54) pour l'alimentation du récipient (50) en liquide d'absorption ;
un dispositif d'échange thermique (52), installé à l'intérieur du récipient (50), pour le chauffage d'un liquide à l'intérieur du récipient (50) ;
une conduite de circulation (90) pour l'extraction du liquide se trouvant à l'intérieur du récipient (50), la circulation du liquide et le renvoi du liquide dans le récipient (50) ; et
une pompe de circulation (98) installée dans la conduite de circulation (90),
**caractérisé en ce que** la conduite d'alimentation en liquide d'absorption (54) est raccordée à la conduite de circulation (90) et est configurée pour alimenter la conduite de circulation (90) en liquide d'absorption.

2. Appareil de récupération (10) selon la revendication 1,
dans lequel la conduite de circulation (90) comprend une première extrémité raccordée à une partie inférieure du récipient (50), et est configurée pour extraire le liquide du récipient (50) par l'intermédiaire de la première extrémité.

3. Appareil de récupération (10) selon la revendication 1 ou 2, dans lequel la conduite de circulation (90) comprend une deuxième extrémité reliée au récipient (50) et est configurée pour renvoyer le liquide vers le récipient (50) par l'intermédiaire de la deuxième extrémité, et dans lequel la deuxième extrémité est reliée à une partie en phase gazeuse du récipient (50).

4. Appareil de récupération (10) selon la revendication 1 ou 2, dans lequel la conduite de circulation (90) comprend une deuxième extrémité raccordée au récipient (50) et est configurée pour renvoyer le liquide vers le récipient (50) par l'intermédiaire de la deuxième extrémité,
dans lequel la deuxième extrémité est reliée à une partie en phase liquide à l'intérieur du récipient (50), au-dessus du fond du dispositif d'échange thermique.

5. Appareil de récupération (10) selon l'une quelconque des revendications 1 à 4, comprenant en outre :
un réservoir de récupération de liquide usé (78) pour le stockage d'un liquide usé provenant du récipient (50) ;
une conduite de liquide usé (68) installée entre le récipient (50) et le réservoir de récupération de liquide usé (78) ; et une pompe à liquide usé (74), installée dans la conduite de liquide usé (68), pour l'envoi du liquide usé du récipient (50) vers le réservoir de récupération de liquide usé (78),
dans lequel la conduite de circulation (90) est formée de manière passer à travers la pompe à liquide usé (74), et dans lequel la pompe à liquide usé (74) est configurée pour fonctionner en tant que pompe de circulation.

6. Appareil de récupération (10) selon l'une quelconque des revendications 1 à 5,
dans lequel le récipient (50) est configuré de telle sorte qu'un processus de récupération d'un liquide d'absorption ayant absorbé du CO₂ ou du H₂S comme matière cible d'absorption soit effectué dans le récipient ; dans lequel l'appareil de récupération comprend en outre un dispositif d'alimentation en agent de suppression de choc (80) pour l'ajout d'un agent de suppression de choc dans la conduite d'alimentation en liquide d'absorption (54) ou dans la conduite de circulation (90) ; et
dans lequel l'agent de suppression de choc contient un liquide enrichi présentant une concentration en matière cible d'absorption supérieure à celle du liquide d'absorption.

7. Appareil de récupération (10) selon la revendication 6,
dans lequel le liquide d'absorption de CO₂ est une solution aqueuse d'un agent d'absorption de CO₂ ; l'agent d'absorption de CO₂ étant une alcanolamine, de l'hydroxyde de sodium, de l'hydroxyde de potassium ou de l'hydroxyde de calcium.

8. Appareil de récupération (10), comprenant :
un récipient (50), qui est configuré de telle sorte qu'un processus de récupération d'un liquide d'absorption ayant absorbé une matière cible d'absorption soit effectué dans le récipient ; une conduite d'alimentation en liquide d'absorption (54) pour l'alimentation du récipient (50) en liquide d'absorption ;
une conduite d'alimentation en eau pour l'alimentation du récipient en eau ;
un dispositif d'échange thermique (52), installé à l'intérieur du récipient (50), pour le chauffage d'un liquide à l'intérieur du récipient (50) qui contient le liquide d'absorption et l'eau ; et
un dispositif d'alimentation en agent de suppression de choc (80) pour l'ajout d'un agent de suppression de choc dans le récipient (50) à partir d'une partie inférieure du récipient (50) par l'intermédiaire d'une conduite d'alimentation en agent de suppression de choc reliée à ladite partie inférieure, la conduite d'alimentation en agent de suppression de choc étant prévue séparément de la conduite d'alimentation en liquide d'absorption et de la conduite d'alimentation en eau, et dans lequel l'agent de suppression de choc contient un gaz inerte ou un liquide enrichi présentant une concentration en matière cible d'absorption supérieure à celle du liquide d'absorption.

9. Appareil de récupération de CO₂, comprenant : une tour d'absorption configurée pour éliminer le CO₂ présent dans un gaz d'échappement par mise en contact avec un liquide d'absorption contenant un agent d'absorption ;
une tour de régénération pour la régénération du liquide d'absorption provenant de la tour d'absorption ; et l'appareil de récupération (10) selon l'une quelconque des revendications 1 à 8,
dans lequel l'appareil de récupération de CO₂ est configuré de telle sorte qu'au moins une partie du liquide d'absorption stocké dans la tour de régénération soit acheminée vers le réservoir (50) par l'intermédiaire de la conduite d'alimentation en liquide d'absorption (54).

10. Appareil de récupération de CO₂, comprenant :
une tour d'absorption (2) configurée pour éliminer le CO₂ présent dans un gaz d'échappement par mise en contact avec un liquide d'absorption contenant un agent d'absorption ;
une tour de régénération (4) pour la régénération du liquide d'absorption provenant de la tour d'absorption (2) ; et l'appareil de récupération (10) selon la revendication 7,
dans lequel l'appareil de récupération de CO₂ est configuré de telle sorte qu'au moins une partie d'un liquide pauvre en CO₂ stocké dans la tour de régénération (4) soit acheminée vers la conduite d'alimentation en liquide d'absorption (54) en tant que liquide d'absorption, et dans lequel l'appareil de récupération de CO₂ est configuré de telle sorte qu'au moins une partie d'un liquide riche en CO₂ stocké dans la tour d'absorption (2) soit acheminée vers la partie d'alimentation en agent de suppression de choc (80) en tant qu'agent de suppression de choc.

11. Procédé de récupération comprenant :
une étape consistant à alimenter un récipient (50) contenant un dispositif d'échange thermique (52) avec un liquide d'absorption par l'intermédiaire d'une conduite d'alimentation en liquide d'absorption (54), le liquide d'absorption ayant absorbé une matière cible d'absorption ;
une étape consistant à effectuer un processus de récupération en chauffant, à l'aide du dispositif d'échange thermique, un liquide se trouvant à l'intérieur du récipient (50) contenant le liquide d'absorption ;
une étape consistant à extraire le liquide se trouvant à l'intérieur du récipient (50) vers une conduite de circulation (90) ; et
une étape consistant à renvoyer le liquide extrait de la conduite de circulation (90) vers le récipient (50), en faisant circuler le liquide à l'aide d'une pompe de circulation installée dans la conduite de circulation,
**caractérisé en ce que** la conduite d'alimentation en liquide d'absorption (54) est raccordée à la conduite de circulation, et dans lequel l'étape consistant à alimenter en liquide d'absorption comprend l'alimentation du récipient (50) en liquide d'absorption par l'intermédiaire de la conduite de circulation.

12. Procédé de récupération selon la revendication 11, comprenant en outre une étape consistant à ajouter un agent de suppression de choc à la conduite d'alimentation en agent d'absorption (54) ou à la conduite de circulation (90).

13. Procédé de récupération selon la revendication 12, comprenant :
l'ajout, en tant qu'agent de suppression de choc, d'un liquide riche présentant une concentration en matière cible d'absorption supérieure à celle du liquide d'absorption, dans la conduite d'alimentation en agent d'absorption (54) ou dans la conduite de circulation (90).

14. Procédé de récupération de CO₂, comprenant :
une étape consistant à amener un liquide d'absorption contenant un agent d'absorption à absorber le CO₂ présent dans les gaz d'échappement, dans une tour d'absorption (2) ;
une étape consistant à acheminer le liquide d'absorption depuis la tour d'absorption (2) vers une tour de régénération (4), et à régénérer le liquide d'absorption dans la tour de régénération (4) ; et
une étape consistant à mettre en œuvre le procédé de récupération selon l'une quelconque des revendications 11 à 13, dans lequel l'étape consistant à alimenter le réservoir (50) en liquide d'absorption comprend l'alimentation du réservoir (50) avec au moins une partie du liquide d'absorption stocké dans la tour de régénération (4).
